Europäisches Patentamt

(19) European Patent Office

Office européen des brevets

(11) Publication number: **0 170 312**
**B1**

(12) **EUROPEAN PATENT SPECIFICATION**

(45) Date of publication of patent specification: **11.05.88**

(21) Application number: **85201062.8**

(22) Date of filing: **03.07.85**

(51) Int. Cl.⁴: **G 11 B 5/70, G 11 B 5/71, G 11 B 5/72, G 11 B 5/84**

(54) **Magnetic recording element and method of manufacturing same.**

(30) Priority: **05.07.84 NL 8402136**

(43) Date of publication of application:
**05.02.86 Bulletin 86/06**

(45) Publication of the grant of the patent:
**11.05.88 Bulletin 88/19**

(84) Designated Contracting States:
**DE FR GB IT NL**

(73) Proprietor: **PD Magnetics B.V.**
**Molenstraat 37**
**NL-4902 NM Oosterhout (NL)**

(72) Inventor: **Huisman, Hendrikus Frederikus**
**c/o Internat. Octrooibureau B.V. Prof. Holstlaan 6**
**Eindhoven (NL)**
Inventor: **Pigmans, Henricus Johannes Maria**
**c/o Internat. Octrooibureau B.V. Prof. Holstlaan 6**
**Eindhoven (NL)**

(74) Representative: **Weening, Cornelis et al**
**INTERNATIONAAL OCTROOIBUREAU B.V. Prof. Holstlaan 6**
**NL-5656 AA Eindhoven (NL)**

(56) References cited:
**DE-A-1 953 459**
**DE-A-2 533 850**
**DE-A-3 341 205**
**DE-B-1 232 206**
**US-A-3 766 067**

**IBM TECHNICAL DISCLOSURE BULLETIN, vol. 26, no. 9, February 1984, page 4455, New York, US; M.R. LORENZ et al.: "Controlled pore formation in magnetic disk coatings to optimize lubricant retention"**

Courier Press, Leamington Spa, England.

## 0 170 312

### Description

The invention relates to a magnetic recording element comprising a non-magnetic carrier bearing a magnetic coating layer comprising a lubricant capable of diffusing within said layer to the surface thereof and a magnetic pigment which is dispersed by means of a dispersing agent in a binder.

Such a recording element preferably has the shape of a tape and is used for recording audio and/or video information.

In manufacturing a magnetic recording element, a coating layer is provided on the non-magnetic carrier and comprises a binder, a solvent for the binder, a magnetic pigment which is dispersed in the solution of the binder by using a dispersing agent, a lubricant and optionally further auxiliary substances, for example, antistatics. The coating layer is dried in air, usually at elevated temperature at which the solvent evaporates. The layer is then compressed by means of a roller as a result of which a smooth surface is obtained. Said smooth surface is necessary so as to minimize the friction between the coating layer and the recording/playback head of the playback apparatus. The compression of the coating layer is termed a calendering process or calendering.

The non-magnetic carrier is manufactured, for example from a synthetic resin, for example, a polyester. The magnetic pigment may be, for example, of a usual type, for example, a pigment of Fe particles or $\gamma$-Fe$_2$O$_3$ particles doped or not doped with other elements, for example, Co, Ni, Zn, Sn, Ti. Another suitable pigment is a pigment of CrO$_2$ particles.

The dispersing agent, binder, and lubricant may also be, for example, of a convenient type. Examples of binders are polyvinyl chloride, polyvinyl acetate, polyester, polyester amide, polyacrylate, polyurethane or copolymers of, for example, vinyl chloride, vinyl acetate, acrylonitrile, vinyl alcohol, vinyl butyral and vinylidene chloride. A suitable dispersing agent is lecithin, monoesters or diesters of phosphoric acid and alcohols which may be ethoxylated, alkyl acrylsulphonic acids, etc. The quantity of dispersing agent is 0.5—6% by weight calculated on the quantity of pigment. Examples of lubricants are silicone oil, petroleum jelly, paraffin wax, fatty acids, for example, oleic acid and stearic acid, fatty acid esters, for example, stearates and fatty acid amides, for example, stearamide. The quantity is 0.2—20% by weight calculated on the total coating layer.

The magnetic coating layer may also comprise other auxiliary substances, for example, antistatic agents such as soot or carbon black.

The problems underlying the present invention relate to the function and distribution of the lubricant.

The lubricant reduces the frictional force between the recording/playback head of the magnetic recording apparatus and the magnetic tape moving past the head. The lubricant is operative at the surface of the magnetic coating and must be capable of reaching said surface. This implies that the lubricant is not quite compatible with the binder and as a result of this has the tendency to diffuse to the surface. This also implies that in the case of variations in temperature and degree of humidity, too much or too little lubricant moves to the surface, as a result of which either the magnetic tape becomes sticky and lubricant is deposited on the recording/playback head, or, in the case of too little lubricant, good tape travel is not obtained.

It is the object of the present invention to provide a solution to the above-mentioned problems.

This object is achieved by means of a magnetic recording element of the type mentioned in the opening paragraph which is characterized in that after drying and calendering the magnetic coating layer comprises a drier thickener and has a structure of pores having a diameter of 5—100 nm, a pore volume which is 5—50% of the volume of the coating layer, and a pore surface which is at least a factor of 100 times larger than the free surface of the coating layer remote from the carrier, the said pore structure forming a reservoir for the lubricant.

The porous structure forms a buffer space for the lubricant as a result of which a uniform diffusion of the lubricant takes place to the surface of the magnetic coating layer. The lubricant is present on this surface in the form of a very thin, particularly a monomolecular layer so that the effect of the lubricant is optimal and the disadvantages mentioned above do not occur.

It is to be noted that German Auslegeschrift 25.33.850 discloses a magnetic recording element which has a porous structure in an intermediate phase, i.e. after drying of the magnetic coating but before calendering. For this purpose, at least two solvents having different vapour pressures are used in the magnetic coating layer, if desired in combination with different binders. Upon drying, i.e. upon removing the organic solvents, pores are formed in the magnetic coating layer. According to the above German Auslegeschrift, such a layer has the advantage that after calendering, i.e. compression of the coating layer, a very smooth surface is obtained during calendering of this layer, the pores are compressed so that in the final phase the magnetic coating layer is no longer porous.

In the IBM Technical Disclosure Bulletin Vol. 26 No. 9 (February 1984) page 4455 a magnetic disk coating is disclosed whereby the lubricant is uniformly or more uniformly distributed over the surface of the disk. This is reached by providing pores or holes in the surface which "anchor" the lubricant onto said surface. Thereto particulate matter is added to the coating that has the property of forming voids by evaporation or dissolution such as particulate matter consisting of paraformaldehyde. During curing at elevated temperatures the said matter will decompose, leaving voids behind. This known coating in which closed pores are provided is not suitable for use in the recording element of the present case in which the

2

lubricant is not applied onto the surface of the coating but is incorporated throughout said coating and must be able to diffuse optimally to the surface of the coating.

The invention also relates to a method of manufacturing a magnetic recording element.

More in particular the invention relates to a method of manufacturing a magnetic recording element in which a magnetic coating layer which comprises a binder, a solvent for the binder, a magnetic pigment which is dispersed in the binder by using a dispersing agent, and a lubricant is provided on a non-magnetic carrier, the coating layer is dried, the solvent evaporating, and the layer is then compressed characterized in that a drier or a thickener is incorporated in the coating layer, so that after drying and calendering the coating layer has a structure of pores having a diameter of 5—100 nm a pore volume which is 5—50% of the volume of the coating layer and a pore surface which is at least a factor of 100 times larger than the free surface of the coating layer remote from the carrier, said pore structure forming a reservoir for the lubricant.

Driers and thickeners are generally known in the paint and lacquer industries.

In a favourable embodiment of the method according to the invention, a drier or a thickener is used selected from the group consisting of metal salts of carboxylic acids, non-ionopenic diurethanes, calcium-containing micellar organic complexes and mixtures thereof.

Very suitable is the use of a non-ionogenic diurethane in a quantity of 1—10% by weight calculated on the binder. The non-ionogenic urethanes are known substances which are used as thixotropic agents (thickeners) in the paint industry. The substances are used in particular in high solids lacquers to prevent sagging and yet to maintain a certain degree of fluidity. Suitable non-ionogenic diurethanes are known *inter alia* from Netherlands Patent Application No. 7613121 published on May 29, 1978 (priority 25.11.76) in the name of AKZO N.V. The non-ionogenic diurethanes may be used with substantially any binder. When the non-ionogenic diurethanes are used in the method according to the invention, a network of diurethane with the binder is formed upon drying the magnetic coating layer. This network ensures that the pores formed as a result of evaporation of the solvent do not disappear during the compression of the magnetic coating layer.

Another very suitable drier which may be used in the method according to the invention is zinc octoate in a quantity of 0.5—5% by weight calculated on the binder.

In a further favorable embodiment, a calcium-containing micellar complex of $CaCO_3$ and an alkylated benzene sulphonic acid is used as a thickener in a quantity of 1—10% by weight calculated on the quantity of binder.

The calcium-containing micellar organic complexes consist of $CaCO_3$ and at least one alkaline earth metal salt of an organic acid which is susceptible to reaction with an excess of a base, an equivalent ratio of $CaCO_3$ to the alkaline earth metal in the salt being 2:1 to 100:1. The particles of the complex have an average crystallite size of 2.5 to 40 nm. These materials and their preparation are decribed in United States Patent Specification 3,766,067. A great variety of organic acids is soluble in these complexes, for example, oil-soluble phosphoric acids, carboxylic acids and sulphur-containing acids. Oil-soluble carboxylic acids and sulphonic acids are to be preferred. Suitable sulphonic acids are the petroleum sulphonic acids and alkylated benzene- and naphthalene sulphonic acids. Particularly suitable thixotropic agents of this type are marketed by Lubrizol Corporation, Wickliffe under the tradename of "Ircogel®".

It will be obvious that mixtures of driers and thickeners can be used so that the extent of porosity can be adjusted. As already stated hereinbefore, the pores have a diameter of 5—100 nm, a pore volume which is 5—50% (preferably 10—30%) of the volume of the coating layer, and a pore area which is at least a factor 100 larger than the free surface of the coating layer. This combination of porosity parameters improves the action and effectiveness of the lubricant in the coating layer to a high extent.

A typical composition of a coating layer having a solvent as used in the method according to the invention is recorded below.

| Component: | Weight percentage: |
|---|---|
| Magnetic pigment | 20.7 |
| Binder | 27.8 |
| Lubricant | 1.4 |
| Cross-linking agent (hardener) | 1.0 |
| Dispersing agent | 0.3 |
| Solvent | 36.7 |
| Drier or thickener | 2.0 |

Properties of the magnetic coating layer after calendering at 200 kg/cm.:

| | |
|---|---|
| Pore volume | 28 |
| Pore area ratio | 145 |
| Coefficient of friction—initial | 0.21 |
| —after storage | 0.23 |

The invention will be described in more detail with reference to the specific example.

Specific example:

The ingredients mentioned in the table below are mixed for 2—5 hours in a bead mill having glass beads of a diameter of 1 mm. In this manner various magnetic coating mixtures are manufactured having compositions I, II, III and IV specified in the Table. The coating mixture I comprises no thickener (diurethane). The mixtures II—IV comprise different percentages of diurethane.

Each coating mixture is provided on a tape of polyester in a thickness between 30 and 50 µm, for example, 40 µm. The tape with magnetic coating layers are dried for some time at elevated temperature, the organic solvents used evaporating. Finally, the tape with magnetic coating layer is calendered by means of a steel roller (counter roller with coating of paper) at a line pressure of 100—200 kg/cm and a temperature of 80°C. The ultimate thickness of the coating layer is 5 micrometres.

The porosity of the magnetic coating layer (pore volume, pore diameter, pore surface) was measured according to methods known *per se* as described in I.E.E.E., May 20, (1), *pp.* 13—15, 1984. The measured values are recorded in the Table. Of course, they are average values.

The coefficient of friction of each coating layer has been measured both immediately after the manufacture and after storage at 60°C for 30 days and a relative humidity of 90%. The measured average values are recorded in the Table. The coating layer of tape No. I showed a sticky surface after storage. Soiling of the head of the playback apparatus occurred upon playing back the tape. Moreover, there was an irregular tape transport as a result of the high coefficient of friction. The coating layers of the tapes II, III and IV did not show this detrimental phenomenon.

TABLE

| Magnetic tape Ref. No. | I | II | III | IV |
|---|---|---|---|---|
| Composition coating layer in g $CrO_2$ | 99.2 | 99.2 | 99.2 | 99.2 |
| Dispersing agent | 3.0 | 3.0 | 3.0 | 3.0 |
| Carbon black | 2.1 | 2.1 | 2.1 | 2.1 |
| Butylstearate | 1.6 | 1.6 | 1.6 | 1.6 |
| Tetrahydrofuran (solvent) | 73.1 | 75.1 | 77.1 | 79.2 |
| Cyclohexanone (solvent) | 73.1 | 75.1 | 77.1 | 79.2 |
| Polyurethane (binder) 17% sol. in THF-cyclohexanone 1:1 | 97.3 | 92.4 | 87.5 | 82.7 |
| Isocyanate (hardener) | 2.2 | 2.2 | 2.2 | 2.2 |
| Diurethane (thickener) | — | 0.8 | 1.7 | 2.5 |
| Pore volume in % of volume coating layer | — | 25 | 30 | 34 |
| Pore diameter in nm | — | 30 | 26 | 30 |
| Ratio of pore surface to surface of coating layer | — | 133 | 184 | 180 |
| (Initial) coefficient of friction | 0.35 | 0.27 | 0.23 | 0.23 |
| Coefficient of friction after 30 days storage at 60°C and 90% relative humidity | 0.65 | 0.34 | 0.24 | 0.25 |

**Claims**

1. A magnetic recording element comprising a non-magnetic carrier bearing a pressed magnetic coating layer including a lubricant which is capable of diffusing within said layer to the surface thereof and a magnetic pigment which is dispersed by means of a dispersing agent in a binder, characterized in that after drying and calendering the magnetic coating layer comprises a dryer or a thickener and has a structure of pores having a diameter of 5—100 nm, a pore volume which is 5—50% of the volume of the coating layer and a pore surface which is at least a factor of 100 times larger than the free surface of the coating layer remote from the carrier, said pore structure forming a reservoir for the lubricant.

2. A method of manufacturing a magnetic recording element, in which method a magnetic coating layer which comprises a binder, a solvent for the binder, a lubricant and a magnetic pigment which has been dispersed in the binder by using a dispersing agent is provided on a non-magnetic carrier, the coating layer is dried so that the solvent evaporates, and the layer is than compressed, characterized in that a drier or a thickener is incorporated in the coating layer, and that the coating layer after drying and calendering has a structure of pores having a diameter of 5—100 nm, a pore volume which is 5—50% of the volume of the coating layer and a pore surface which is at least a factor of 100 times larger than the free surface of the coating layer remote from the carrier, said pore structure forming a reservoir for storage of the lubricant.

3. A method as claimed in Claim 2, characterized in that a drier or a thickener is used selected from the group consisting of metal salts of carboxylic acids, non-ionogenic diurethanes, calcium-containing micellar organic complexes and mixtures thereof.

4. A method as claimed in Claim 3, characterized in that a non-ionogenic diurethane is incorporated in the coating layer in a quantity from 1—10% by weight calculated with respect to the binder.

5. A method as claimed in Claim 3, characterized in that a calcium-containing micellar organic complex of $CaCO_3$ and an alkylated benzene sulphonic acid is used as a thickener in a quantity of 1—10% by weight calculated on the quantity of binder.

6. A method as claimed in Claim 3, characterized in that zinc octoate is used in a quantity of 0.5—5% by weight calculated on the binder.

7. A method as claimed in Claim 2, characterized in that a fatty acid amide is used as a lubricant.

**Patentansprüche**

1. Magnetisches Aufzeichnungselement mit einbem nichtmagnetischen Träger mit einer gepressten magnetischen Deckschicht mit einem Schmiermittel, das in der genannten Schicht bis zur Oberfläche diffundiert werden kann sowie mit einem magnetischen Pigment, das mittels eines Dispersionsmittels in einem Binemittel dispergiert ist, dadurch gekennzeichnet, dass die magnetische Deckschicht nach dem Trocknen und Kalandern ein Trocknungs- oder ein Verdickungsmittel aufweist und eine Porenstruktur hat mit Poren mit einem Durchmesser von 5—100 nm, einem Porenvolumen von 5—50% des Volumens der Deckschicht und einer Porenoberfläche, die um wenigstens einen Faktor 100 grösser ist als die von dem Träger abgewandte freie Oberfläche der Deckschicht, wobei die genannte Porenstruktur einen "Behälter" für das Schmiermittel bildet.

2. Verfahren zum Herstellen eines magnetischen Aufzeichnungselementes, bei dem eine magnetische Deckschicht mit einem Bindemittel, einem Lösungsmittel für das Bindemittel, einem Schmiermittel und einem unter Verwendung eines Dispersionsmittels in dem Bindemittel dispergierten magnetischen Pigment auf einem nichtmagnetischen Träger vorgsehen ist, wobei die Deckschicht derart getrocknet wird, dass das Lösungsmittel verdunstet und wonach die Schicht gebresst wird, dadurch gekennzeichnet, dass in der Deckschicht ein Trocknungs- oder ein Verdickungsmittel vorgesehen ist und dass die Deckschicht nach dem Trocknen und Kalandern eine Porenstruktur hat mit Poren mit einem Durchmesser von 5—100 nm, einem Porenvolumen von 5—50% des Volumens der Deckschicht und einer Porenoberfläche, die um wenigstens einen Faktor 100 grösser ist als die von dem Träger abgewandte freie Oberfläche der Deckschicht, wobei die genannte Porenstruktur einen "Behälter" zum Speichern des Schmiermittels bildet.

3. Verfahren nach Anspruch 2, dadurch gekennzeichnet, dass ein Trocknungs- oder ein Verdickungsmittel verwendet wird, das gewählt ist aus der Gruppe, die aus Metallsalzen von Carbonsäure, nichtionogenen Diurethanen, kalziumhaltigen kollodialen organischen Komplexen und Gemischen derselben besteht.

4. Verfahren nach Anspruch 3, dadurch gekennzeichnet, dass in der Deckschicht ein nicht-ionogenes Diurethan vorgesehen ist und zwar in einer Menge von 1—10 Gew.%, berechnet in bezug auf das Bindemittel.

5. Verfahren nach Anspruch 3, dadurch gekennzeichnet, dass als Verdickungsmittel ein kalziumhaltiges kollodidales organisches Komplex von $CaCO_3$ und alkylierter Benzolschwefelsäure in einer Menge von 1—10 Gew.%, berechnet in bezug auf die Menge des Bindemittels verwendet wird.

6. Verfahren nach Anspruch 3, dadurch gekennzeichnet, dass Zinkoktoat in einer Menge von 0,5—5 Gew.%, berechnet in bezug auf das Bindemittel verwendet wird.

7. Verfahren nach Anspruch 2, dadurch gekennzeichnet, dass ein Fettsäreamid als Schmiermittel verwendet wird.

**Revendications**

1. Elément d'enregistrement magnétique comportant un support von magnétique muni d'une couche de revétement magnétique comportant un lubrifiant pouvant diffuser dans ladite couche vers sa surface et un pigment magnétique qui est dispersé à l'aide d'un agent de dispersion dans un liant, caractérisé en ce qu'après séchage et laminage, la couche de revétement magnétique comporte un dessicateur ou un épaississant et présente une structure de pores d'un diamètre de 5 à 100 nm, un volume des pores qui est de 5 à 50% du volume de la couche de revêtement, et une surface de pores qui est supérieur d'au moins un facteur de 100 fois à la surface libre de la couche de revêtement opposée au porteur, ladite structure de pores formant un réservoir pour le lubrifiant.

2. Procédé pour la réalisation d'un élément d'enregistrement magnétique, dans lequel une couche de revêtement magnétique comportant un liant, un solvant pour le liant, un lubrifiant et un pigment magnétique dispersé dans le liant par utilisation d'un agent de dispersion, est appliquée sur un support non magnétique, la couche de revêtement est séchée, le solvant évaporé et la couche est alors comprimée, caractérisé en ce qu'un dessicateur ou un épaississement est incorporé dans la couche de revêtement, de façon qu'après séchage et calendrage, la couche de revêtement présente une structure de pores d'un diamètre de 5 à 100 nm, un volume de pore qui est de 5 à 50% du volume de la couche de revêtement et une surface des pores qui est supérieure d'au moins un facteur de 100 à la surface libre de la couche de revêtement opposée au support, ladite structure de pores constituant un réservoir pour le lubrifiant.

3. Procédé selon la revendication 2, caractérisé en ce qu'on utilise un dessicateur ou un épaississant sélectionné dans le groupe constitué par des sels métalliques d'acides carboxyliques, des diuréthanes non ionogènes, des complexes organiques micellaires contenant du calcium et leurs mélanges.

4. Procédé selon la revendication 3, caractérisé en ce qu'un diuréthane non ionogène est incorporé dans la couche de revêtement dans une quantité de 1 à 10% en poids rapportée au liant.

5. Procédé selon la revendication 1, caractérisé par l'utilisation d'un complexe organique micellaire contenant du calcium de $CaCO_3$ et d'un acide de benzène sulfonique alkylé comme épaississant dans une quantité de 1 à 10% en poids rapportée à la quantité de liant.

6. Procédé selon la revendication 3, caractérisé en ce que l'octoate de zinc est utilisé dans une quantité de 0,5 à 5% en poids rapportée au liant.

7. Procédé selon la revendication 2, caractérisé par l'utilisation d'un amide d'acide de grasse comme lubrifiant.